# EUROPÄISCHE PATENTSCHRIFT

(11) **EP 3 121 154 B1**
(45) Veröffentlichungstag und Bekanntmachung des Hinweises auf die Patenterteilung: **06.05.2020**
(21) Anmeldenummer: 16179186.8
(22) Anmeldetag: 13.07.2016
(51) Int. Cl.: C03B 23/09, C03B 23/043, C03B 23/045, C03B 23/049

(54) **FORMDORN MIT DIFFUSIONSSCHICHT ZUR GLASFORMUNG**
GLASS-FORMING MANDREL WITH A DIFFUSION LAYER
MANDRIN DE FORMAGE COMPRENANT UNE COUCHE DE DIFFUSION DESTINEE AU FORMAGE DE VERRE

(30) Priorität: 23.07.2015 DE 102015111993
(43) Veröffentlichungstag der Anmeldung: 25.01.2017
(73) Patentinhaber: Schott AG, 55122 Mainz (DE)
(72) Erfinder: WITTE, Jörg Dr., 64319 Pfungstadt (DE); GALETZ, Mathias Dr., 60486 Frankfurt (DE); NAJI, Ammar, 60486 Frankfurt (DE)
(74) Vertreter: Blumbach · Zinngrebe Patentanwälte PartG mbB

(56) Entgegenhaltungen:
- WO-A1-2012/085619
- WO-A2-2006/039705
- US-A- 3 371 409
- US-A- 3 371 409
- US-A- 4 845 139
- US-A1- 2003 049 386
- US-A1- 2007 243 398
- US-A1- 2014 141 277
- US-A1- 2015 114 043

## Beschreibung

Die Erfindung betrifft allgemein die Herstellung von Glasprodukten. Insbesondere betrifft die Erfindung ein Formwerkzeug, umfassend einen Formdorn, ein Verfahren und eine Vorrichtung zur Heißformgebung von Glas. Die auf diese Weise erhaltenen Glasprodukte können beispielsweise als Pharmapackmittel verwendet werden.

Im Zuge der Herstellung von hohlkörperförmigen Glasprodukten ist die Heißformgebung ein wesentlicher Verfahrensschritt. Der Ablauf der Heißformgebung umfasst dabei üblicherweise mehrere aufeinander folgende Aufwärm-und Formprozesse, mit welchen ausgehend von Rohrglas-Körpern die gewünschte Endgeometrie geschaffen wird.

Hohlkörperförmige Glasprodukte, welche im medizinischen Bereich verwendet werden sollen, unterliegen dabei üblicherweise sehr hohen Anforderungen in Bezug auf mögliche Verunreinigungen, welche aus der Heißformgebung resultieren können. Hieraus folgen sehr hohe Anforderungen an die bei der Heißformgebung verwendeten Formwerkzeuge. Diese hohen Anforderungen beziehen sich insbesondere auf die für die Formwerkzeuge verwendeten Materialien. So wird bei der Herstellung von hohlkörperförmigen Glasprodukten üblicherweise ein Konus geformt, wobei ein Formwerkzeug, umfassend einen Formdorn, zur Anwendung kommt. Dem für den Formdorn verwendeten Material kommt dabei eine zentrale Rolle zu.

Bei der Herstellung von Pharmapackmitteln oder bei Heißformgebung von medizinischen Aufbewahrungsgefäßen für Medikamente aus Glas, beispielsweise Ampullen, Spritzen, Fläschchen oder Karpulen, wird, neben anderen metallischen Formgebungsmaterialien aus Stahl, auch Wolfram z.B. als Formdornmaterial eingesetzt.

Reines Wolfram oder Wolfram-Legierungen weisen eine hohe thermomechanische Festigkeit auf, die besonders bei geringen Materialquerschnitten sehr vorteilhaft sind. Dies ist z.B. der Fall bei Formdornen mit einem Durchmesser von weniger als 0,5 mm bis ca. 1 mm. Von daher sind Formdorne umfassend Wolfram oder Wolfram-Legierungen im Kontaktbereich mit dem umzuformenden Glas von Vorteil.

Während der Herstellung von z.B. Spritzen aus Rohrglas-Körpern, welche üblicherweise auf getakteten Maschinen, beispielsweise auf Rundtaktmaschinen, erfolgt, erwärmt sich der Formdorn bei der Heißformgebung auf Temperaturen von etwa 800°C bis 900°C. Aufgrund der geringen Taktzeiten ist das Material dabei einem häufigen und raschen Temperaturwechsel unterzogen. Der Einfluss von Temperatur, Glasverdampfungsprodukten, Luft, Feuchtigkeit und die tribologische Belastung durch das angepresste, teigige Glas während der Heißformgebung können daher einen Materialabtrag am Formdorn bewirken.

Dieser Materialabtrag des Formdorns, insbesondere im Kontaktbereich mit dem umzuformenden Glas-Vorprodukt, ist im allgemeinen unerwünscht und führt zu einer Veränderung der Außengeometrie des Formdorns oder einer Reduktion des Durchmessers, wobei die Abnahme des Durchmessers zudem häufig nicht gleichmäßig axial ausgeprägt ist. Dieser Materialabtrag hat verschiedene weitere negative Auswirkungen.

So führt er u.a. dazu, dass die für die Formgebung vorgegebenen Sollmaße durch die Veränderung der Außengeometrie des Formdorns im Zeitverlauf immer weniger eingehalten und die geforderten Kanaldimensionen damit nur für einen begrenzten Zeitraum eingehalten werden können. Die Standzeit des Formdorns ist damit vergleichsweise gering und/oder zusätzlicher Aufwand für nachträgliche Justagen wird erforderlich. Ferner kann das abgetragene Material in das Innere des gerade geformten Glasproduktes gelangen. So kann der Materialabtrag bei der Konusformung von Spritzen beispielsweise in den sogenannten Konuskanal gelangen.

Pharmakologische Wirkstoffe, die in den Spritzen gelagert werden, können allerdings mit den wolframhaltigen Verunreinigungen im Innenraum des Glasproduktes in Wechselwirkung treten, wodurch deren Wirksamkeit verändert werden kann. Für bestimmte pharmazeutische Wirkstoffe werden daher zunehmend Glasgefäße gefordert, die einen bestimmten Wolframgehalt unterschreiten.

Das Dokument EP 1 809 579 B1 schlägt zur Vermeidung von Wolfram-haltigen Verunreinigungen daher vor, einen Formdorn zu verwenden, der kein Wolfram enthält.

Weiterhin wird in dem Dokument WO 2012/039705 A2 ein Formdorn vorgeschlagen, welcher eine Schutzschicht als Auflageschicht umfasst. Das Basismaterial kann dabei wolframhaltig sein. Als Schichtmaterial werden ein Neutralglas-eigenes Material bzw. ein Glas vorgeschlagen, welches ein Bestandteil des umzuformenden Glases ist, um auf diese Weise Fremdverunreinigungen auszuschließen.

Eine derartige Beschichtung des Formdorns führt allerdings nicht dazu, dass der nachteilige Effekt des Materialabtrags des Formdorns verhindert werden kann. Dadurch ist die Standzeit eines derartigen Formdorns eher gering.

Weiterhin kann aufgrund der hohen mechanischen Belastung eine Rissbildung des Schichtmaterials oder auch ein Abplatzen von Schichtbestandteilen auftreten, so dass die Standzeit des Formdorns weiter verringert wird.

Hieraus ergibt sich die Aufgabe der vorliegenden Erfindung, die darin zu sehen ist, ein Material für ein Formwerkzeug, insbesondere für einen Formdorn, sowie ein Verfahren und eine Vorrichtung zur Formung hohlkörperförmiger Glasprodukte zur Verfügung zu stellen.

Das Eintragen von unerwünschten Verunreinigungen, insbesondere von Wolfram, in das umzuformende Glasprodukt durch das Formwerkzeug, insbesondere durch den Formdorn, soll dabei sicher ausgeschlossen werden. Insbesondere soll der Innenbereich bzw. der Innenkonus des umgeformten Glasproduktes frei von Verunreinigungen durch das Formwerkzeug, insbesondere durch den Formdorn, bleiben.

Ferner soll das Formwerkzeug, insbesondere der Formdorn, eine hohe Standzeit aufweisen. Dabei soll der Materialabtrag möglichst verhindert werden, so dass eine besonders hohe Standzeit bei gleichbleibender Qualität ohne zusätzlichen Justageaufwand erreicht werden kann.

Weiterhin soll auch das Abplatzen von äußeren Bestandteilen des Formwerkzeuges, insbesondere des Formdorns, weitgehend ausgeschlossen werden.

Schließlich soll auch die Gefahr von Rissbildungen auf der Oberfläche des Formdorns vermieden werden.

Wünschenswert wäre es ferner, zumindest als Basismaterial das Material Wolfram verwenden zu können, da es über sehr gute thermische und chemische Eigenschaften in Bezug auf die Heißformung von Glasprodukten verfügt.

Überraschend einfach wird diese Aufgabe durch den Gegenstand der unabhängigen Ansprüche gelöst. Bevorzugte Ausführungsformen und Weiterbildungen der Erfindung sind den jeweiligen Unteransprüchen zu entnehmen.

Demgemäß betrifft die Erfindung ein Formwerkzeug zum Umformen von hohlkörperförmigen Glas-Vorprodukten gemäß Anspruch 1.

Des weiteren sieht die Erfindung eine Vorrichtung zum Umformen von Glasprodukten vor, umfassend
- eine Einrichtung zur lokalen Erhitzung eines Bereichs eines Glas-Vorprodukts bis über dessen Erweichungspunkt, und
- zumindest ein Formwerkzeug zum Umformen wenigstens eines Abschnittes eines mit der Einrichtung zur lokalen Erhitzung erhitzten Bereichs des Glas-Vorprodukts, wobei das Formwerkzeug einen erfindungsgemäßen Formdorn umfasst.

Die Vorrichtung kann einen Brenner zur lokalen Erhitzung umfassen, wobei ferner eine Rotationseinrichtung vorgesehen ist, um das Formwerkzeug und das Glas-Vorprodukt relativ zueinander zu rotieren.

Das Formwerkzeug kann weiterhin ein Walzenpaar umfassen, welches so angeordnet ist, dass die Walzen des Walzenpaares auf der Oberfläche eines mittels der Rotationseinrichtung in Rotation versetzten Glas-Vorproduktes abrollen, wobei von dem Laserlicht ein zwischen den Walzen liegender Bereich auf dem Umfang des Glas-Vorproduktes beleuchtet wird.

Die Vorrichtung kann auch in einer weiteren Ausführungsform einen Laser zur lokalen Erhitzung umfassen. Hierbei ist das Formwerkzeug bevorzugt so ausgebildet ist, dass ein Oberflächenbereich des umzuformenden Abschnittes des Glas-Vorproduktes nicht durch das Formwerkzeug abgedeckt wird, wobei der Laser oder eine dem Laser nachgeschaltete Optik so angeordnet ist, dass das Laserlicht bei der Umformung auf den nicht vom Formwerkzeug abgedeckten Bereich eingestrahlt wird, und wobei eine Steuereinrichtung vorgesehen ist, welche den Laser ansteuert so dass zumindest zeitweise das Glas-Vorprodukt während der Umformung durch das Laserlicht erwärmt wird

Damit eine Erwärmung des Glases eines in der Vorrichtung umzuformenden Glas-Vorprodukts erfolgt, wird ein Laser verwendet, welcher Licht einer Wellenlänge emittiert, für welche das Glas des Glas-Vorprodukts höchstens teiltransparent ist, so dass das Licht zumindest teilweise im Glas absorbiert wird.

Das mit einer derartigen Vorrichtung durchführbare Verfahren zum Umformen von Glasprodukten basiert entsprechend darauf, dass
- lokal ein hohlkörperförmiges Glas-Vorprodukt bis über dessen Erweichungspunkt erhitzt, und
- mit zumindest einem Formwerkzeug wenigstens ein Abschnitt eines mit einer Einrichtung zur lokalen Erhitzung erhitzten Bereiches des Glas-Vorproduktes umgeformt wird,
- wobei das Formwerkzeug einen erfindungsgemäßen Formdorn wie vorstehend beschrieben umfasst, und
- wobei das Glas-Vorprodukt und das Formwerkzeug relativ zueinander mittels einer Rotationsvorrichtung rotiert werden.

Das erfindungsgemäße Formwerkzeug ist besonders geeignet für die kontaminationsarme Herstellung von Pharmapackmitteln aus Glas.

Demgemäß umfasst die Erfindung auch eine Spritze aus Glas, welche hergestellt oder herstellbar ist mit einem Verfahren wie vorstehend beschrieben, welche, insbesondere im Innenbereich, nur sehr geringe oder keine Verunreinigungen, insbesondere nur sehr geringe oder keine Wolfram-Verunreinigungen, aufweist.

Die Erfinder haben herausgefunden, dass ein Formwerkzeug zum Umformen von hohlkörperförmigen Glas-Vorprodukten, umfassen einen Formdorn mit einer Diffusionsschicht, besonders geeignet ist für die Umformung eines Abschnittes eines mit einer Einrichtung zur lokalen Erhitzung erhitzten Bereiches des Glas-Vorproduktes.

Als Basis- oder Kernmaterial des Formdorns ist dabei ein Material bevorzugt, welches eine hohe Warmfestigkeit und ein hohes Elastizitätsmodul aufweist, so dass es für die mechanischen Belastungen auch bei Temperaturen im Bereich von 400 °C oder mehr geeignet ist. Ferner sollte es beständig sein gegenüber Säuren und Glasverdampfungsprodukten wie beispielsweise Borate und eine Oxidationsbeständigkeit an Luft bis 400 °C aufweisen, um den Materialabtrag während oder durch die Heißformgebungsprozesse zu vermeiden.

Ein geeignetes Basismaterial stellen die Edelmetalle oder deren Legierungen dar, beispielsweise Platin. Ein besonders bevorzugtes Basis- oder Kernmaterial für einen erfindungsgemäßen Formdorn sind Wolfram oder Wolfram-haltige Legierungen.

Wolfram zeichnet sich durch eine hohe Beständigkeit gegenüber Säuren wie beispielsweise HF und HCl aus und wird nur gering durch Schwefelsäure angegriffen. Weiterhin weist es eine gute Oxidationsbeständigkeit an Luft bis 400°C auf. Zudem sind eine hohe Warmfestigkeit und ein hohes Elastizitätsmodul günstig für eine Verwendung als Kernmaterial für einen Formdorn. Unter Kernmaterial ist dabei ein Material des Formdorns zu verstehen, welches wesentlich für die Heißformgebung ist.

Überraschend kann der Materialabtrag von Kernmaterial des Formdorns, insbesondere von Wolfram-haltigen Kernmaterial, dadurch unterbunden oder zumindest sehr stark reduziert werden, dass die äußere Randzone des Kernmaterials mit einer Diffusionsschicht versehen wird. Die Diffusionsschicht zeichnet sich durch ein zusätzliches, von dem Kernmaterial abweichendes Material aus.

Diffusionsschichten zeichnen sich weiterhin dadurch aus, dass sich die Schichtzusammensetzung in Richtung der Oberflächennormalen verändert. Sie können durch verschiedene Verfahren auf den Werkstoff aufgebracht werden. Diffusionsschichten können auch durch Implantationstechniken erzeugt werden.

In der Regel erfolgt die thermische Eindiffusion des abgeschiedenen Materials in den Grundwerkstoff bei Temperaturen zwischen 500 °C und 1200 °C, wobei die genauen Temperaturen von dem jeweiligen Kernmaterial und dem eingebrachten Material abhängen. Diffusionsschichten können beispielsweise durch Hochtemperatur-CVD-Verfahren, wie zum Beispiel Packzementation, erzeugt werden.

Ein derartiges Verfahren ist etwa in dem Dokument DE 691 10 286 T2 oder in dem Dokument WO 2012/089200 A1 beschrieben.

Die Packzementation setzt die Diffusion eines Materials oder mehrerer Materialien zur Bildung einer Oberflächenbeschichtung ein. Dabei wird ein Substratmaterial mit einem Material einer Metallquelle in Kontakt gebracht, so dass ein Metall aus dem Material der Metallquelle in das Substratmaterial diffundieren kann.

Bei der Packzementation wird ein Substratmaterial in einer Pulvermischung eingebracht, die sowohl ein Metall, welches mit dem Substratmaterial reagieren soll, als auch ein inertes Material aufweist. Zusätzlich kann ein Aktivator aus der Gruppe der Halogenide verwendet werden, der als Feststoff oder flüssiger Stoff bei Raumtemperatur, zum Beispiel FeCl₃, AlCl₃, NH₄Cl im Pack vorliegt oder über das Gas beispielsweise als HCl oder direkt als SiCl₄ zugeführt wird und das Material der Metallquelle in einen gasförmigen Zustand versetzt.

Das Metall kann auch im gasförmigen Zustand als Reinstoff oder als Verbindung zugeführt werden. Auch kann das Metall im Prozess aufschmelzen und in diesem Zustand mit dem Substrat reagieren. Das gasförmige Material der Metallquelle gelangt zum Substratmaterial und scheidet sich als Metall auf der Oberfläche ab (Zersetzungsreaktion). Bedingt durch die hohe Temperatur diffundiert das abgeschiedene Metall in das Substratmaterial ein und bildet eine Diffusionsschicht im oberflächennahen Bereich des Substartmaterials. Abhängig von der gewählten Temperatur, der Prozessdauer und der Art des Metalls können unterschiedlich dicke Diffusionszonen im Substratmetarial gebildet werden. Ebenfalls abhängig von der Materialkombination und den Prozessparametern kann es innerhald der Diffusionszone zu einer Phasenbildung kommen. Je nach Materialkombination wird zusätzlich eine reduzierende Gasatmosphäre bei dem Beschichtungsprozess erzeugt, in dem ein entsprechendes Gasgemisch die Beschichtungskammer durchströmt. Dieser Prozess kann auch im Unterdruck (Vakuum) erfolgen.

Das Vorhandensein anderer Elemente in der Diffusionszone und/oder eine Phasenbildung kann dazu führen, dass die Eigenschaften in der Randzone, u.a. das Korrosionsverhalten des Substratmaterials, verändert werden.

Dabei kann als Kernmaterial des Formdorns Wolfram oder eine Wolfram-haltige Legierung verwendet werden. Die erzeugte Diffusionsschicht ist von einer hohen Dichte und von gleichmäßiger Dicke gekennzeichnet.

Der Formdorn mit Diffusionsschicht zeichnet sich ferner dadurch aus, dass die Verunreinigungen, die durch die Umformung in das umzuformende Glasprodukt durch das Formwerkzeug eingetragen werden, auf ein Minimum reduziert werden können. Dabei bleibt insbesondere ein Innenbereich bzw. ein Innenkonus des umgeformten Glasproduktes frei von Verunreinigungen, insbesondere von Verunreinigungen mit Wolfram.

Mit dem erfindungsgemäßen Formdorn mit Diffusionsschicht können daher Spritzen als Pharmapackmittel erzeugt werden, welche insbesondere innerhalb des Hohlraums und/oder innerhalb des inneren Konusbereiches der Spritze eine sehr geringe Kontamination aufweisen.

Die Kontamination des Elementes Wolfram kann dabei in einem Bereich von weniger als 500 ng, bevorzugt weniger als 300 ng und besonders bevorzugt weniger als 100 ng jeweils pro Spritze liegen. Dabei kann eine sehr geringe Verunreinigung mit Wolfram vorliegen, wobei ein Gehalt an Wolfram, insbesondere im Innenbereich der Spritze, insbesondere in einem Bereich von mehr als 0,1 ng, mehr als 1 ng, mehr als 10 ng vorhanden kann. Eine derartige Menge an Wolfram ist im Allgemeinen unschädlich.

Der Nachweis der Wolfram-Kontamination erfolgt mittels einer wässrigen Extraktions-Methode, wobei das innere Volumen der Spritze ausgewaschen wird. Dabei wird bei erhöhter Temperatur gearbeitet (typisch sind 50°C bis über 100°C). Der chemische Nachweis vom Wolfram erfolgt im Eluat mittels ICP-MS.

Ein weiterer Vorteil der Erfindung ist darin zu sehen, dass abhängig vom Konzentrationsgradienten ein Unterschied im Ausdehnungsverhalten zwischen dem Kernmaterial und der Diffusionsschicht besser kompensiert werden kann im Vergleich zu Auflageschichten, welche mit dem Basismaterial häufig nur gering verzahnt sind und einen geringeren Verbund haben. Hierdurch kann die Gefahr eines Abplatzens von äußeren Bestandteilen des Formdorns weitgehend verringert werden. Gleichzeitig ist auch die Gefahr von Rissbildungen minimiert.

Entsprechend der Wirkungsweise kann das eindiffunduierte Material als ein Reservoir für die Neubildung einer äusseren Passivschicht wirken, wenn es zu äusseren Beschädigungen kommt. Hierdurch kann eine sehr hohe Standzeit des Formdorns erreicht werden. Zudem ist es so möglich, eine besonders gleichbleibende hohe Qualität des umgeformten Glasproduktes zu erreichen, ohne dass häufige, zusätzliche Justagetätigkeiten an der Vorrichtung notwendig werden.

Wie vorstehend ausgeführt können durch das eindiffundierte Material intermetallische Phasen im oberflächennahen Bereich des Basismaterials, also des Kernmaterials des Formdorns, gebildet werden. Diese bilden die sogenannte Diffusionszone aus. In der äußersten Zone kann eine stabile Oxidschicht ausgebildet werden, die die Oxidation des darunter liegenden Materials verhindert und eine Passivschicht darstellt. Hierdurch können Oxidationsschutzschichten erzeugt werden, die thermodynamisch stabile Oxide, ganz allgemein z.B. Siliziumoxid (SiO₂), Aluminiumoxid (Al₂O₃), Titanoxid (TiO₂) oder Chromoxid (Cr₂O₃), ausbilden. Diese Passivschicht verhindert weiterführende Oxidation.

Diese Metalle, beispielsweise Aluminium, Silizium, Chrom, besitzen eine höhere Affinität gegenüber Sauerstoff als Wolfram und bilden thermodynamisch sehr stabile Oxide.

Ein erfindungsgemäßer Formdorn mit Diffusionsschicht ist dadurch gekennzeichnet, dass der Mindestgehalt des Diffusionsmaterials, gemessen an der Oberfläche des Formdorns, wenigstens 40 Atom % beträgt. Dies gilt beispielsweise für Silizium als Diffusionsmaterial.

In einer besonders bevorzugten Ausführungsform wird als Kernmaterial Wolfram ausgewählt und als Diffusionsmaterial Silizium. Mittels der Packzementation kann eine oberflächennahe Eindiffusion von elementarem Silizium in die äußeren Randzonen des Formdorns erreicht werden. Hierdurch können im oberflächennahen Bereich die intermetallischen Verbindungen, beispielsweise Wolframsilizide in Form von WSi₂, ausgebildet werden.

Das gebildete Wolframsilizid ist äusserst oxidationsbeständig, vergleichbar mit Molybdänsilizid. Diese sogenannte Silizierung der Wolfram- oder Wolframhaltigen Oberfläche des Formdorns führt bei Temperaturen oberhalb von 500 °C an sauerstoffhaltiger Atmosphäre unter anderem zur Bildung einer stabilen SiO₂-Schicht an der Formdornoberfläche, so dass der umgebende Sauerstoff nicht mit dem Wolfram reagiert, sondern vom Silizium als Siliziumoxid gebunden wird. Das Oxidationsverhalten wird somit deutlich verbessert, welches einen sehr positiven Einfluß auf den Korrosionsverschleiß des Formdorns im Einsatz hat. Eine Wärmebehandlung vor dem Einsatz eines sogenannten silizierten Formdornes an sauerstoffhaltiger Atmosphäre führt zur Ausbildung einer Passivschicht. Die Wärmebehandlung kann zwischen 500 °C und 800 °C an Luft für eine Dauer von ca. 1 h durchgeführt werden.

Die Schichtdicke der Diffusionsschicht des silizierten Formdornes liegt dabei in einem Bereich von 1 bis 200 µm, bevorzugt von 1 bis 100 µm und besonders bevorzugt in einem Bereich von 1 bis 20 µm.

In einer weiteren bevorzugten Ausführungsform kann eine Diffusionsschicht basierend auf Aluminium in dem Formdorn erzeugt werden. Auch hier kann das Kernmaterial Wolfram umfassen oder Wolfram-haltig sein. Auch diese Diffusuionsschicht bewirkt bei hohen Temperaturen an Luft die Ausbildung eine stabilen Aluminiumoxidschicht, die die weitere Oxidation des Grundmaterials verhindert. Dadurch wird der Korrosionsverschleiß des Formdorns im Heissformgebungsprozess mit Glas deutlich reduziert.

Eine Wärmebehandlung vor dem Einsatz dieses sogenannten alitierten Formdorns an sauerstoffhaltiger Atmosphäre führt zur Ausbildung einer Passivschicht. Die Wärmebehandlung kann zwischen 500 °C und 800 °C an Luft für eine Dauer von ca. 1 h durchgeführt werden. Eine Vorabpassivierung bewirkt im Einsatz eine weitere Reduktion der Abgabe von Wolframverbindungen in das Glasprodukt.

Die Schichtdicke der Diffusionsschicht des alitierten Formdorns liegt dabei in einem Bereich von 1 bis 300 µm, bevorzugt 5 bis 90 µm.

Ein mit einer auf Silizium oder Aluminium basierender Diffusionsschicht ausgebildeter Formdorn mit einem Kernmaterial, umfassend Wolfram oder Wolframhaltige Legierungen, bietet vielfältige Vorteile.

Hierzu gehören eine deutlich erhöhte Standzeit, da der Massenverlust durch Materialabtrag oder durch Bildung flüchtiger Oxide durch den silizierten oder alitierten oberflächennahen Bereich deutlich reduziert ist.

Ein weiterer großer Vorteil liegt darin, dass durch den geringeren Korrosionsverschleiß deutlich weniger Partikel im Kontaktbereich mit dem umzuformenden Glas-Vorprodukt, beispielsweise im Kontaktbereich mit dem Konuskanal einer Spritze, abgelagert werden. Gleichzeitig werden deutlich weniger flüchtige Wolframkomponenten in das Innere des hohlkörperförmigen Glasproduktes eingebracht, etwa in den Innenraum der Spritze. Der chemisch analytisch nachweisbare Wolfram-Gehalt wird somit erheblich reduziert. Hierdurch ist das erfindungsgemäße Formwerkzeug, insbesondere der erfindungsgemäße Formdorn, besonders geeignet zur Verwendung in der Heißformgebung von Glasprodukten, welche als Pharmapackmittel eingesetzt werden.

Zusätzlich ist eine besonders hohe Qualität der Maßeinhaltung gegeben, da der Materialabtrag des Fordorns reduziert ist. Dadurch kann ein enges Toleranzfeld bezüglich der Geometrie des Glasproduktes eingehalten werden.

Das Formwerkzeug, insbesondere der Formdorn, kann Wolfram oder Wolframlegierungen umfassen. In einer besonders bevorzugten Ausführungsform umfasst das Formwerkzeug daher einen Formdorn mit einem Kernmaterial, welches einen Wolframanteil von wenigstens 70 Gew.-%, bevorzugt wenigstens 90 Gew.-%, besonders bevorzugt wenigstens 95 Gew.-% und ganz besonders bevorzugt wenigstens 99,9 Gew.-% aufweist.

Der Formdorn kann auch modifizierte Wolfram-Basislegierungen als Kernmaterial umfassen. Als besonders geeignet haben sich folgende ODS-Wolfram-Basislegierungen herausgestellt: Wolfram-Zirkonoxid (W-ZrO₂), Wolfram-Ceriumoxid (W-CeO₂) sowie Wolfram-Lanthanoxid (W-La₂O₃). Der Begriff ODS bzw. ODS-Legierung steht dabei für die Bezeichnung "Oxid dispersed strengthed" (Oxid-Dispersions verfestigt) bzw. Oxid-Dispersionsverfestigte Legierung.

Im Fall von Wolfram-Zirkonoxid (W-ZrO₂) liegt der Anteil von dispersoid zugesetztem ZrO₂ bei 0,01 Gew.-% bis zu 2,5 Gew.-%, bevorzugt bei 0,1 bis zu 2,2 Gew.-%, besonders bevorzugt bei 0,7 bis 0,9 Gew.-%.

Im Fall von Wolfram-Ceriumoxid (W-CeO₂) liegt der Anteil von dispersoid zugesetztem CeO₂ bei 0,01 Gew.-% bis zu 2,5 Gew.-%, bevorzugt bei 0,1 Gew.-% bis zu 2,5 Gew.-%, und besonders bevorzugt bei 1,8 Gew.-% bis zu 2,2 Gew.-%.

Im Fall von Wolfram-Lanthanoxid (W-La₂O₃) liegt der Anteil von dispersoid zugesetztem La₂O₃ bei 0,01 Gew.-% bis zu 2,5 Gew.-%, bevorzugt bei 0,1 Gew.-% bis zu 2,5 Gew.-% und besonders bevorzugt bei 1,8 Gew.-% bis zu 2,2 Gew.-%.

Ergänzend dazu erweisen sich mit Kalium dotierte Legierungen als besonders geeignet. Kalium dotierte Wolfram-Legierungen weisen eine erhöhte Rekristallisations-und Erholungstemperatur auf.

Besonders geeignet sind Wolfram-Basislegierungen mit einem Kaliumanteil zwischen 5 und 100 ppm, bevorzugt zwischen 30 und 80 ppm und besonders bevorzugt zwischen 50 und 70 ppm. Neben warmfesten reinem Wolfram oder Wolframlegierungen kann das Kernmaterial des Formdorns auch Edelmetall oder deren Legierung umfassen. Hierzu gehören etwa Platin oder Rhodium oder deren Legierungen.

Der Formdorn kann weitere Materialien umfassen. So kann der Formdorn beispielsweise, etwa aus Stabilitätsgründen, ein keramisches Basismaterial umfassen, auf dem das Kernmaterial des Formdorns aufgebracht ist.

Vorzugsweise umfasst die Diffusionsschicht zumindest denjenigen Bereich der Oberfläche des Formdorns, welcher während des Umformprozesses im Kontakt mit dem Glas-Vorprodukt steht. Dieses ist im Allgemeinen zumindest die vordere, der Spitze des Formdorns zugewandte äußere Mantelfläche.

Die Erfindung wird nachfolgend anhand bevorzugter Ausführungsformen und unter Bezugnahme auf die beigefügten Figuren detaillierter beschrieben. Weitere Einzelheiten der Erfindung ergeben sich aus der Beschreibung der dargestellten Ausführungsbeispiele und den angefügten Ansprüchen.

### Die Zeichnungen zeigen:

- Fig. 1: Teile einer Vorrichtung zur Umformung von Rohrglas,
- Fig. 2: ein Transmissionsspektrum eines Glases eines Glas-Vorprodukts,
- Fig. 3A-3F: Schnittansichten durch ein Rohrglas im Verlauf des Umformprozesses,
- Fig. 4: einen Abschnitt eines Formdorns mit einer Diffusionsschicht in einer Draufsicht,
- Fig. 5: eine Übersicht über Materialeigenschaften von Wolfram,
- Fig. 6: einen Querschliff durch einen silizierten Formdorn in einer Ausschnittvergrößerung,
- Fig. 7: einen Querschliff durch einen alitierten Formdorn in einer Ausschnittvergrößerung,
- Fig. 8: einen Längsschliff durch einen silizierten Formdorn in einer Ausschnittvergrößerung nach dem Einsatz,
- Fig. 9: einen weiteren Längsschliff durch einen silizierten Formdorn in einer Ausschnittvergrößerung nach dem Einsatz,
- Fig. 10: einen nicht behandelten Wolfram-Dorn nach dem Einsatz, und
- Fig. 11: einen metallographischen Längsschliff durch einen nicht behandelten Wolfram-Dorn nach dem Einsatz.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

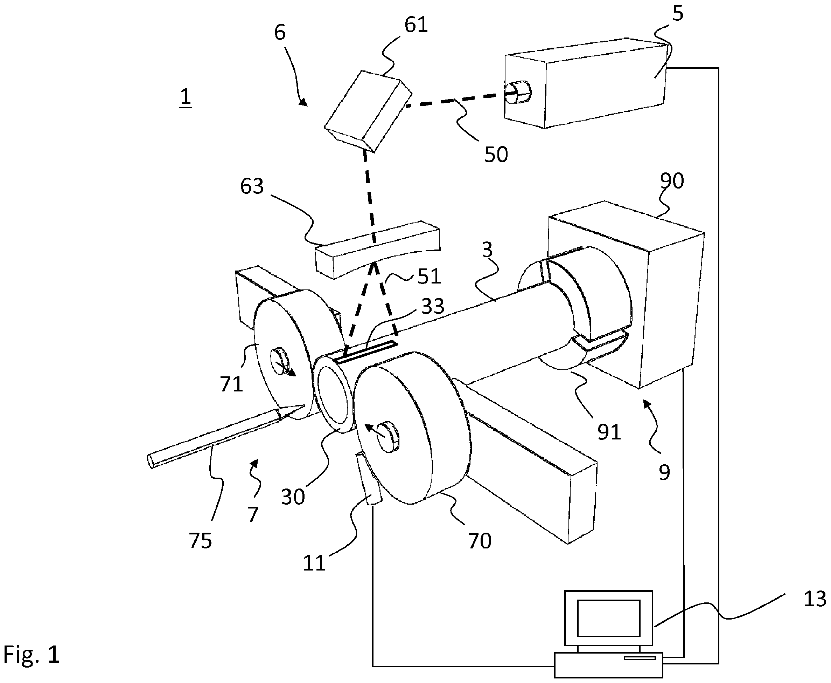

In Fig. 1 ist ein Ausführungsbeispiel einer Vorrichtung 1 zur Durchführung des erfindungsgemäßen Verfahrens dargestellt.

Die als Ganzes mit dem Bezugszeichen 1 bezeichnete Vorrichtung des in Fig. 1 gezeigten Ausführungsbeispiels ist zur Umformung von Glas-Vorprodukten in Gestalt von Rohrgläsern 3 ausgebildet. Im Speziellen wird die Vorrichtung zur Herstellung von Glas-Spritzenkörpern verwendet, wobei mit den in Fig. 1 gezeigten Elementen der Vorrichtung 1 aus dem Rohrglas der Konus des Spritzenkörpers geformt wird.

Das Herstellen des Konus aus dem Rohrglas mittels der Vorrichtung 1 basiert darauf, dass lokal ein Bereich eines Rohrglases 3, hier dessen Ende 30, bis über dessen Erweichungspunkt erhitzt und mit zumindest einem Formwerkzeug wenigstens ein Abschnitt des erhitzten Endes umgeformt wird. Im abgebildeten Beispiel umfasst die Einrichtung zur lokalen Erhitzung einen Laser 5, welcher Licht einer Wellenlänge emittiert, für welche das Glas des Rohrglases 3 höchstens teiltransparent ist, so dass das Licht zumindest teilweise im Glas absorbiert wird.

Anstelle des in Fig. 1 gezeigten Lasers 5 zur lokalen Erhitzung eines hohlkörperförmigen Glas-Vorproduktes ist es selbstverständlich auch möglich, andere Einrichtungen zur lokalen Erhitzung zu verwenden, welche im Rahmen der Heißformgebung von Glas typischerweise eingesetzt werden. Dies können beispielsweise auch Brenner, etwa Gasbrenner, sein. Da die Verwendung derartiger Einrichtungen weitgehend bekannt ist, wird auf eine detaillierte Beschreibung an dieser Stelle verzichtet.

Der Laserstrahl 50 nach Fig. 1 wird mittels einer Optik 6 auf das Rohrglas 3 gerichtet. Während des Umform-Prozesses werden das Formwerkzeug 7 und das Glas-Vorprodukt 3 relativ zueinander mittels einer Rotationseinrichtung 9 rotiert. Im Allgemeinen ist es dabei zweckmäßig, wie auch im gezeigten Beispiel das Rohrglas 3 mit Drehachse entlang der axialen Richtung des Rohrglases 3 zu rotieren. Dazu umfasst die Rotationseinrichtung 9 einen Antrieb 90 mit Futter 91, mit welchem das Rohrglas 3 gehaltert wird. Denkbar wäre auch eine umgekehrte Konfiguration, bei welchem das Rohrglas festgehalten wird und das Formwerkzeug 7 um das Rohrglas rotiert.

Das Formwerkzeug 7 umfasst bei dem in Fig. 1 gezeigten Ausführungsbeispiel zwei Walzen 70, 71, welche bei Rotation des Rohrglases 3 auf dessen Oberfläche abrollen. Dabei wird das Ende 30 des Rohrglases 30 komprimiert, indem die Walzen in radialer Richtung des Rohrglases 3 aufeinander zu geführt werden. Die radiale Bewegung ist in Fig. 1 anhand von Pfeilen an den Drehachsen der Walzen 70, 71 verdeutlicht. Weiterhin ist ein Formdorn 75 als Bestandteil des Formwerkzeugs 7 vorgesehen. Dieser Formdorn 75 wird in die Öffnung des Rohrglases 3 an dessen umzuformenden Ende 30 eingeführt. Mittels des Formdorns 75 wird der Konuskanal des Spritzenkörpers geformt. Der Formdorns 75 kann drehbar gelagert sein, um zusammen mit dem Rohrglas 3 zu rotieren. Ebenso möglich ist es, das rotierende Glas über den festgehaltenen Formdorn gleiten zu lassen.

Um ein Anhaften zu vermeiden, kann hierzu, wie generell bei über die Glasoberfläche gleitenden Formwerkzeugen, ein Trenn- oder Schmiermittel verwendet werden, welches die Reibung bei der Gleitbewegung herabsetzt. Weiterhin ist es möglich, ein Schmiermittel zu verwenden, welches bei den bei der Umformung eingesetzten Temperaturen verdampft. Bei der Verwendung eines solchen Schmiermittels können so vorteilhaft Schmier-, beziehungsweise Trennmittelrückstände auf dem fertig gestellten Glasprodukt vermieden werden.

Zwischen den Walzen 70, 71 ist es möglich, den Laserstrahl 50 auf das Rohrglas zu richten, ohne dass der Laserstrahl 50 durch das Formwerkzeug unterbrochen wird. Demgemäß ist das Formwerkzeug so ausgebildet, dass ein Oberflächenbereich des umzuformenden Abschnittes des Rohrglases nicht durch das Formwerkzeug abgedeckt wird, so dass mittels der dem Laser nachgeschalteten Optik 6 das Laserlicht bei der Umformung auf den nicht vom Formwerkzeug abgedeckten Bereich eingestrahlt wird. Im Speziellen wird vom Laserlicht ein zwischen den Walzen 70, 71 liegender Bereich 33 auf dem Umfang des Rohrglases 3 beleuchtet.

Eine Steuereinrichtung 13 steuert den Umformvorgang. Insbesondere wird mittels der Steuereinrichtung 13 der Laser 5 so angesteuert wird, dass zumindest zeitweise das Rohrglas 3 während der Umformung durch das Laserlicht erwärmt wird.

Die Optik 6 der in Fig. 1 gezeigten Vorrichtung 1 umfasst einen Umlenkspiegel 61, sowie eine Zylinderlinse 63. Mittels der Zylinderlinse 63 wird der Laserstrahl 50 entlang der axialen Richtung des Rohrglases 3 zu einem Fächerstrahl 51 aufgeweitet, so dass der vom Laserlicht ausgeleuchtete Bereich 33 in axialer Richtung des Rohrglases 3 entsprechend gedehnt wird. Da das Rohrglas 3 rotiert, während das Laserlicht eingestrahlt wird, verteilt sich die eingestrahlte Leistung in Umfangsrichtung auf dem Rohrglas, so dass ein zylinderförmiger Abschnitt, beziehungsweise unabhängig von der Form des Glas-Vorprodukts allgemein ein Abschnitt in axialer Richtung entlang der Drehachse erwärmt wird. Dieser Abschnitt hat eine Länge, die vorzugsweise mindestens so groß ist, wie der umzuformende Abschnitt. Letzterer hat eine Länge, die im Wesentlichen durch die Breite der Walzen bestimmt wird. Um spezielle Verteilungen der Laserleistung in axialer Richtung des Rohrglases zu erzielen, kann alternativ oder zusätzlich zur Zylinderlinse 63 auch vorteilhaft ein diffraktives optisches Element verwendet werden.

Der Formungsprozess wird mittels der Steuereinrichtung 13 gesteuert. Unter anderem steuert die Steuereinrichtung 13 die Laserleistung. Weiterhin wird auch die Bewegung der Formwerkzeuge 70, 71, 75 kontrolliert. Ebenfalls gesteuert werden kann auch die Rotationseinrichtung 9, dabei insbesondere die Drehzahl des Antriebs 90, gegebenenfalls auch das Öffnen und Schließen des Futters 91.

Bei der Formung von Spritzenkörpern aus Glas sind für den Laser 5 im allgemeinen Strahlungsleistungen von weniger als 1 Kilowatt ausreichend, um eine schnelle Erwärmung auf die Erweichungstemperatur zu gewährleisten. Nach Erreichen der für die Heißumformung vorgesehenen Temperatur kann dann von der Steuereinrichtung 1 die Laserleistung reduziert werden, so dass die eingestrahlte Laserleistung nur noch die Abkühlung kompensiert. Bei der Herstellung von Spritzenkörpern reichen dazu im Allgemeinen Leistungen zwischen 30 und 100 Watt.

Die Regelung der Laserleistung kann insbesondere auch anhand der Temperatur des Rohrglases 3 vorgenommen werden. Dazu kann in der Steuereinrichtung 13 ein Regelprozess implementiert sein, welcher die Laserleistung anhand der mittels einer Temperatur-Messeinrichtung gemessenen Temperatur regelt, um eine vorgegebene Temperatur oder ein vorgegebenes Temperatur/Zeit-Profil am Glas-Vorprodukt einzustellen. Als Temperatur-Messeinrichtung ist bei dem in Fig. 1 gezeigten Beispiel ein Pyrometer 11 vorgesehen, welches die Wärmestrahlung des Glasrohres an dessen durch den Laser 5 erwärmten Ende 31 misst. Die Messwerte werden der Steuereinrichtung 13 zugeführt und im Regelprozess zur Einstellung der gewünschten Temperatur verwendet.

Besonders vorteilhaft bei einer Anordnung, wie sie beispielhaft Fig. 1 zeigt, ist, dass das Laserlicht die Formwerkzeuge nicht direkt erwärmt. Dies führt dazu, dass die Formwerkzeuge trotz einer Erwärmung des Glas-Vorprodukts während der Umformung im Allgemeinen nicht stärker erwärmt werden als bei einem Prozess mit vorangehender Erwärmung durch Brenner. Insgesamt wird auf diese Weise weniger Wärmeenergie erzeugt und diese Wärmeenergie auch noch gezielter in das Glas-Vorprodukt eingebracht. Damit wird insgesamt die Aufheizung der gesamten Vorrichtung und damit unter anderem durch Wärmedehnungen entstehende Einlaufphänomene reduziert.

Ein bevorzugtes Glas für die Fertigung von Spritzenkörpern ist Borosilikatglas. Besonders bevorzugt wird dabei alkaliarmes Borosilikatglas, insbesondere mit einem Alkaligehalt von weniger als 10 Gewichtsprozent. Borosilikatglas eignet sich generell gut aufgrund der typischerweise hohen Temperaturwechselbeständigkeit. Diese ist günstig, um bei den schnellen Prozesszeiten, wie sie mit der Erfindung erzielbar sind, schnelle Aufheizrampen realisieren zu können.

Ein geeignetes alkaliarmes Borosilikatglas weist folgende Bestandteile in Gewichtsprozent auf:

| | |
|---|---|
| SiO₂ | 75 Gew % |
| B₂O₃ | 10,5 Gew % |
| Al₂O₃ | 5 Gew % |
| Na₂O | 7 Gew % |
| CaO | 1,5 Gew % |

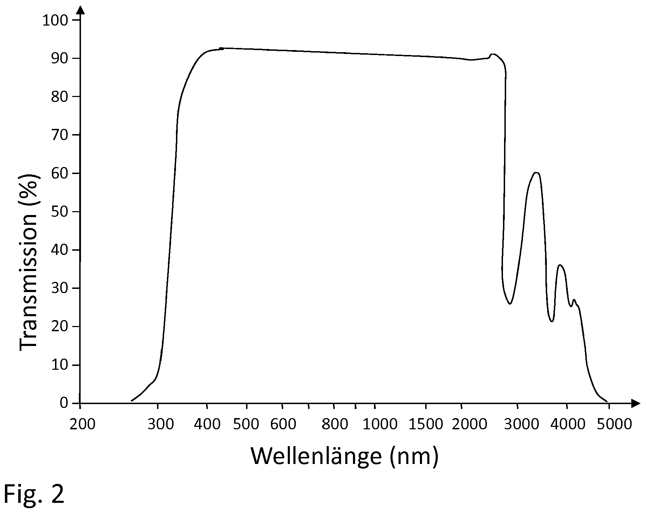

Ein Transmissionsspektrum des Glases zeigt Fig. 2. Die angegebenen Transmissionswerte beziehen sich auf eine Glasdicke von einem Millimeter. Anhand von Fig. 2 ist ersichtlich, dass die Transmission des Glases bei Wellenlängen oberhalb von 2,5 Mikrometern absinkt. Oberhalb von 5 Mikrometern ist das Glas auch bei sehr dünnen Glasdicken praktisch opak.

Die in Fig. 2 gezeigte Abnahme der Transmission im Wellenlängenbereich oberhalb von 2,5 Mikrometern ist nicht wesentlich von der genauen Zusammensetzung des Glases abhängig. So können bei ähnlichen Transmissionseigenschaften die oben angegebenen Gehalte der Bestandteile bevorzugter Borosilikatgläser können auch um jeweils 25 % vom angegebenen Wert variieren. Weiterhin können außer Borosilikatglas selbstverständlich auch andere Gläser eingesetzt werden. Sofern diese bei der Wellenlänge des Lasers höchstens teiltransparent sind, kann zur Erhitzung eine Laserquelle verwendet werden.

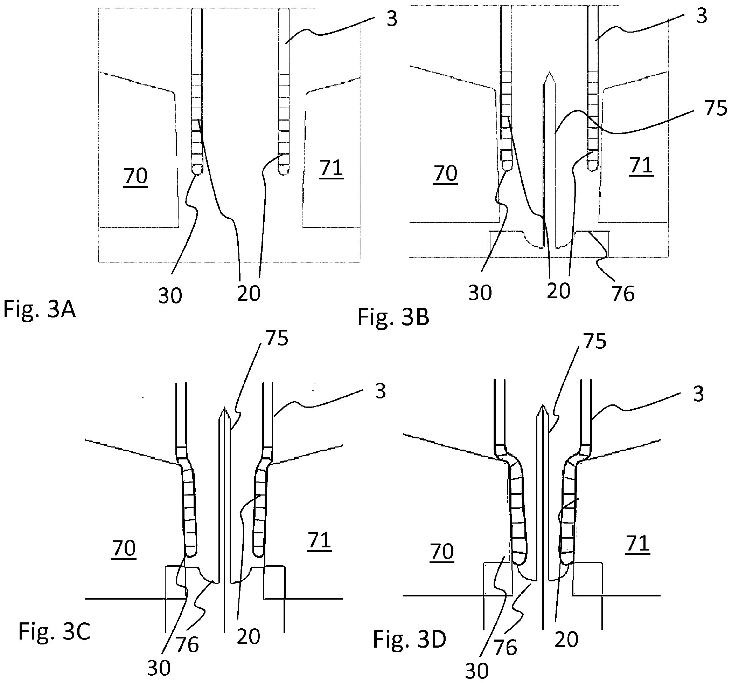

Die Figuren 3A bis 3F zeigen anhand von Schnittansichten eine Simulation eines erfindungsgemäßen Umformprozesses zur Ausformung eines Spritzenkonus aus einem Rohrglas 3 für die Herstellung eines Spritzenkörpers. Die Schnitte der Darstellungen verlaufen entlang der Mittenachse des Rohrglases 3, um welche das Rohrglas rotiert wird. Ebenfalls zu erkennen sind die Walzen 70, 71 und der Dorn 75.

Die in den Schnittansichten des Rohrglases eingezeichneten, anfänglich senkrecht zur Mittenachse des Rohrglases verlaufenden Linien 20 kennzeichnen gedachte Grenzlinien von axialen Abschnitten des Rohrglases 3. Anhand dieser Linien wird der Materialfluss bei der Umformung kenntlich gemacht.

Der Formdorn 75 ragt aus einem Fuß 76 heraus, der zur Formung der vorderen Konusfläche der Spritze dient. Der Fuß 76 ist ein senkrecht zur Betrachtungsrichtung der Fig. 3A bis 3F flach ausgebildetes Bauteil. Anders als dargestellt ist in der tatsächlichen Vorrichtung der Fuß dabei um 90° um die Längsachse des Formdorns 75 gedreht, so dass der Fuß 76 zwischen die Walzen 70, 71 passt. Die Überlappung von Walzen 70, 71 und Fuß 76, wie sie ab Fig. 3C zu erkennen ist, tritt also tatsächlich nicht auf.

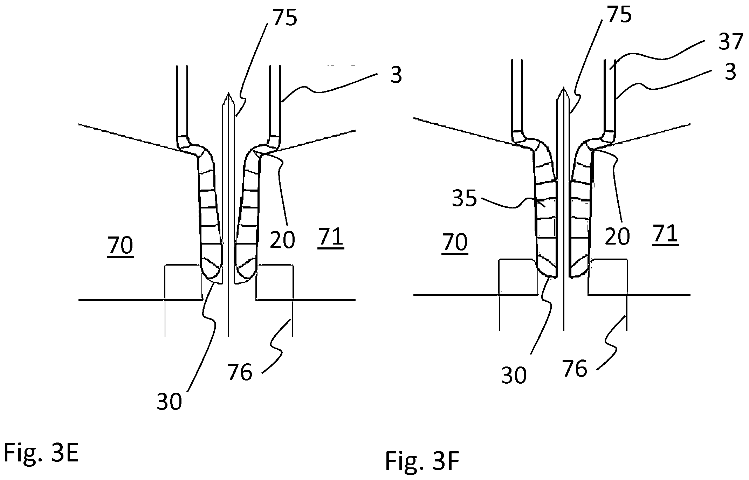

Eine Berührung der Walzen 70, 71 und die beginnende Verformung erfolgt ab der in Fig. 3C gezeigten Position. Es erfolgt nun eine Kompression des Rohrglases 3 durch die radial einwärts zur Mittenachse des Rohrglases bewegten Walzen 70, 71. Bei dem in Fig. 3E gezeigten Stadium berührt der Formdorn 75 innenseitig das Rohrglas und formt den Kanal des Spritzenkonus. Bei dem in Fig. 3F gezeigten Stadium schließlich ist die Ausformung des Spritzenkonus bereits beendet. Anschließend werden die Formwerkzeuge vom ausgeformten Spritzenkonus 35 weggefahren. Alle Formungsschritte zur Ausformung des Spritzenkonus 35 wurden mithin mit den gleichen Formwerkzeugen 70, 71, 75 und dem Fuß 76 durchgeführt. Eine derartige Umformungsstation führt daher alle Heiß-Umformungsschritte an einem Abschnitt des Glas-Vorprodukts aus. Es kann sich nun eine Ausformung des Spritzenflansches, beziehungsweise der Fingerauflage am anderen Ende des Rohrglases erfolgen.

Ab dem Verformungsstadium, wie es in Fig. 3E dargestellt ist, ist gut zu erkennen, dass die radiale Kompression am Spritzenkonus 35 zu einer Verdickung der Wandstärke führt. Hier besteht nun die Möglichkeit, durch die Einstellung einer entsprechenden Temperaturverteilung wie oben beschrieben, einen gewissen Materialfluss vom Ende 30 weg zu erzeugen. Ebenso kann es an den umlaufenden Kanten des ausgeformten Rohrglases im Übergangsbereich zwischen Spritzenzylinder 37 und Spritzenkonus 35 zu einer verminderten Wandstärke kommen. Auch diesem Effekt kann durch Einstellung eines axial inhomogenen Leistungseintrags über die Regelung der axialen Verteilung der Laserleistung begegnet werden.

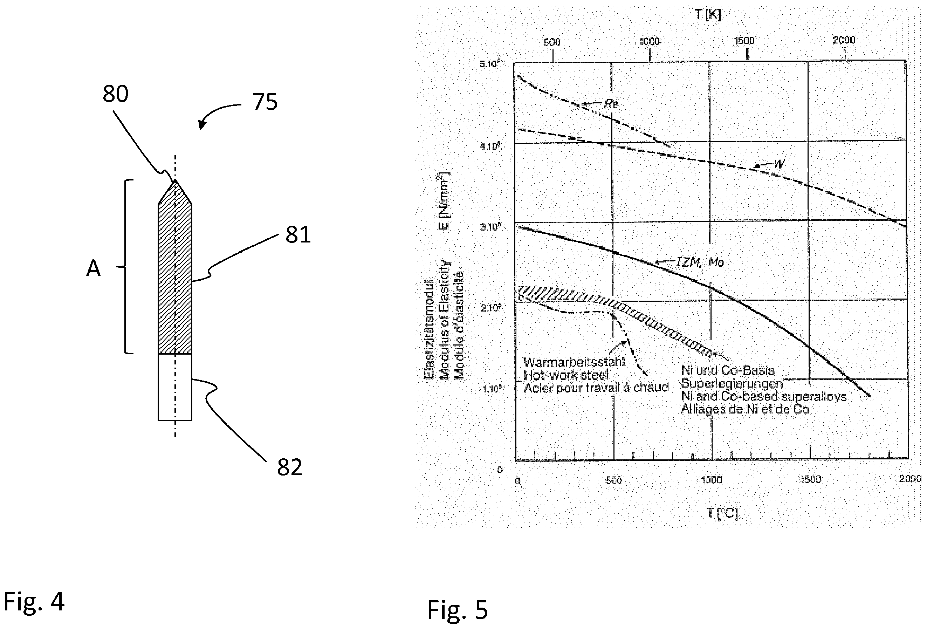

In Fig. 4 ist ein Abschnitt eines Formdorns 75 in einer Draufsicht dargestellt. Ausgehend von der Spitze 80 des Formdorns 75 ist mit A ein an die Spitze angrenzender Bereich des Formdorns 75 markiert, in dem die Mantelfläche 81 des Formdorns 75 während des Umformprozesses in Kontakt mit dem Glas-Vorprodukt kommt oder kommen kann. Zumindest dieser Bereich ist daher vorzugsweise derjenige Bereich, der mit der erfindungsgemäßen Diffusionsschicht 81 versehen ist oder versehen wird. Die Mantelfläche des Formdorns 75 kann auch einen Bereich 82 umfassen, welcher keine Diffusionsschicht aufweist. Dieser Bereich kann etwa für die Aufnahme des Formdorns verwendet werden.

In Fig. 5 ist in einer Übersicht (Quelle: Wolfram-Werkstoffeigenschaften und Anwendungen, Fa. Plansee AG, Reutte, 2000) das Elastizitätsmodul von Wolfram im Vergleich zu anderen Legierungen dargestellt. Deutlich zu erkennen sind das vergleichsweise hohe E-Modul von Wolfram sowie dessen hohe Warmfestigkeit.

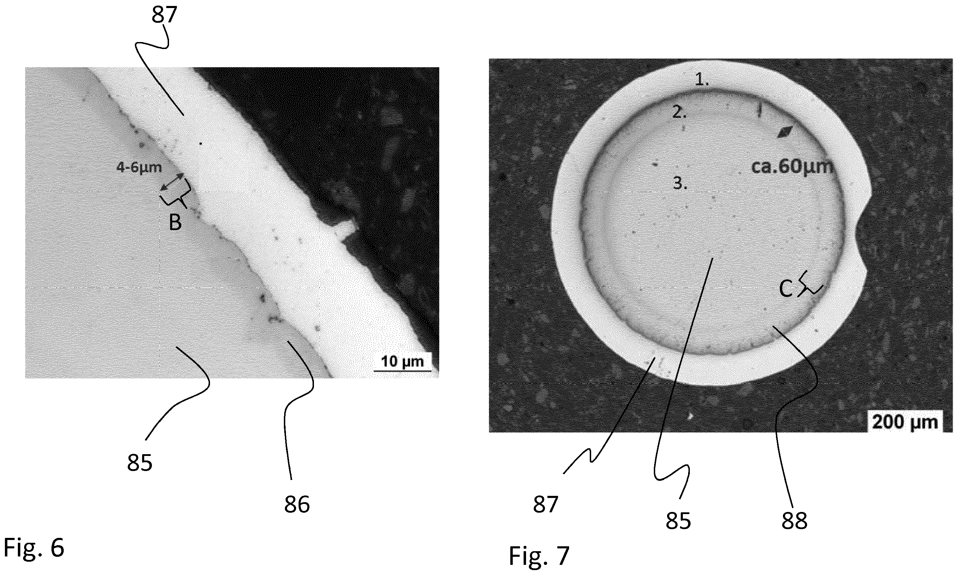

Fig. 6 zeigt einen Querschliff durch einen silizierten Formdorn in einer Ausschnittvergrößerung. Der Formdorn umfasst als Kernmaterial Wolfram. Das Eindiffundieren des Siliziums erfolgte bei einer Temperatur oberhalb 650 °C über einen Zeitraum von mehr als 8 Stunden mittels der Packzementation.

Das Kernmaterial 85 des Formdorns ist im Querschliff zu erkennen. Ebenso ist eine Diffusionszone 86 erkennbar, welche sich an der Oberfläche des Formdorns befindet und in das Innere des Formdorns hineinragt. Die Dicke der silizierten Diffusionszone 86 ist mit B gekennzeichnet liegt bei etwa 4 bis 6 µm, bevorzugt bei etwa 5 µm. Somit reicht die silizierte Diffusionszone 86 etwa 5 µm von der Oberfläche des Formdorns aus gemessen in das Kernmaterial hinein.

Um während der metallographischen Präparation, insbesondere dem Schleifen und dem Polieren der Dorne, den oberflächennahen Bereich zu schützen, werden die Dorne mit einer Nickelbeschichtung umgeben. Diese Schicht 87 ist bei dem Formdorn 75 sichtbar. Diese Schicht 87 findet bei der Verwendung der Dorne keinen Einsatz bei der Heissformgebung von Pharmapackmitteln.

Fig. 7 zeigt einen Querschliff durch einen alitierten Formdorn in einer Ausschnittvergrößerung. Das Kernmaterial 85 des abgebildeten Formdorns 75 ist aus Wolfram hergestellt. Weiterhin erkennbar ist eine alitierte Diffusionszone 88, welche mit C gekennzeichnet ist. Die alitierte Diffusionszone reicht ca. 50 bis 70 µm, bevorzugt etwa 300 µm von der Oberfläche des Formdorns aus gemessen in das Kernmaterial hinein.

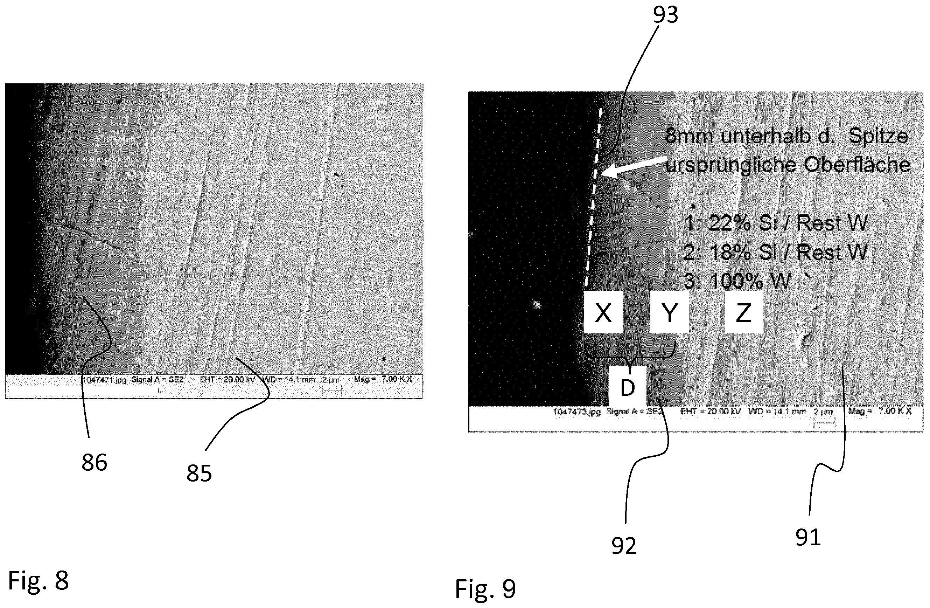

Fig. 8 zeigt einen weiteren Längsschliff durch einen silizierten Formdorn in einer Ausschnittvergrößerung nach dem Einsatz. Das Vorhandensein einer Diffusionsschicht 86 ist deutlich erkennbar. Bei diesem Beispiel wurde eine Silizium-Diffusionsschicht auf dem Formdorn 75 erzeugt und der Formdorn war über eine längerer Zeitraum im Einsatz. So hat er eine Anzahl von ca. 10.000 Zyklen, also Umformprozessen, im Zuge der Heißformgebung von Spritzen durchlaufen.

In Fig. 9 ist ein weiterer Längsschliff durch einen silizierten Formdorn 91 in einer Ausschnittvergrößerung nach dem Einsatz gezeigt. Das Vorhandensein einer Diffusionsschicht 92 ist deutlich erkennbar. Die Diffusionsschicht ist auf der Basis von Silizium erzeugt und weist eine Diffusionszone D mit einer Dicke von etwa 10 µm auf. Bei diesem Beispiel war der Formdorn 91 über einen längeren Zeitraum im Einsatz. So hat er eine Anzahl von ca. 10.000 Zyklen, also Umformprozessen, im Zuge der Heißformgebung von Spritzen durchlaufen.

Die ursprüngliche Außenkante des Formdorns 91 ist mit der gestrichelten Linie 93 angedeutet. Es ist erkennbar, dass die Außenkante noch in einem sehr guten Zustand ist. Zudem hat sich das Aussenmaß nach dem Einsatz kaum verändert hat. Insbesondere ist noch eine hohe Geradheit der Außenkante gegeben. Der Verschleiß der mit der silizierten Diffusionsschicht versehenen Oberfläche des Formdorns 91 ist demnach als sehr gering anzusehen.

An den mit X, Y und Z gekennzeichneten Positionen wurden der Silizium- und der Wolfram-Gehalt bestimmt. In dem mit Z gekennzeichneten Bereich, der eine Position auf dem Kernmaterial des Formdorns bestimmt, liegt der Wolfram-Gehalt bei 100 Gew.-%. In dem mit X gekennzeichneten Bereich, der im Bereich der Diffusionszone D liegt, konnten ein Silizium-Gehalt von etwa 22 Gew.-% und ein Wolfram-Gehalt von etwa 78 Gew.-% festgestellt werden. Bei dem mit Y gekennzeichneten Bereich, der in einem Übergangsbereich liegt, in dem der Gehalt des eindiffundierten Materials deutlich abnimmt, wurde ein Silizium-Gehalt von etwa 18 Gew.-% und ein Wolfram-Gehalt von etwa 82 Gew.-% festgestellt.

Ausgehend von einem vergleichsweise hohen Wert an dem äußeren, zur Oberfläche des Formdorns 91 hin liegenden Bereiches der Diffusionszone, der in dem Beispiel bei etwa 22 Gew.-% oder auch darüber liegen kann, nimmt der Silizium-Gehalt in der Diffusionszone nach innen ab.

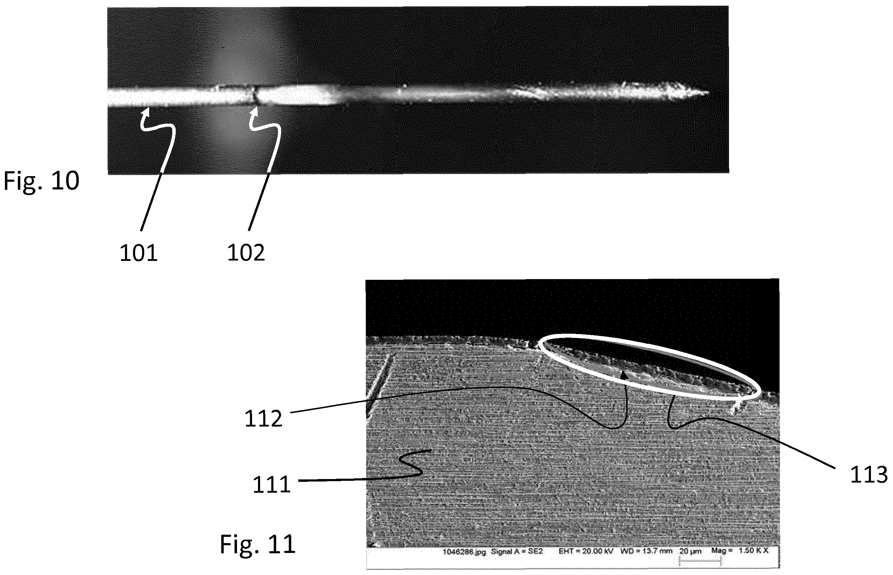

Fig. 10 zeigt als Vergleichsbeispiel einen nicht behandelten Wolfram-Dorn 101 nach dem Einsatz, wobei ca. 3.000 Formgebungsschritten mit dem abgebildeten Formdorn ohne erfindungsgemäße Diffusionsschicht erfolgten. Die Färbung zeigt die Bildung von Oberflächenoxiden auf dem Dorn, deutlich zu erkennen die Taillierung 102 im linken Bereich des abgebildeten Formdorns 101.

Schließlich zeigt Fig. 11 als weiteres Vergleichsbeispiel einen metallographischen Längsschliff durch einen nicht behandelten Wolfram-Dorn 111 nach dem Einsatz, wobei ca. 3.000 Formgebungsschritten mit dem abgebildeten Formdorn ohne erfindungsgemäße Diffusionsschicht erfolgten.
In dem eingezeichneten ovalen Kreis 113 ist die Bildung einer Oxidschicht zu erkennen, deren Dicke etwa 3 bis 5 µm beträgt, und die abgetragen werden kann und sich nachbildet.

Ein erfindungsgemäßes Formwerkzeug, insbesondere ein Formdorn, bringt eine Reihe von Vorteilen mit sich. So gelingt es etwa auf diese Weise, den für die Heißformung von hohlkörperförmigen Vor-Glasprodukten sehr gut geeigneten Werkstoff Wolfram weiterhin zu verwenden, ohne allerdings hierdurch unerwünschte Verunreinigungen, insbesondere im Innenbereich des umgeformten Glasproduktes, zu bewirken.

Dies bringt vielfältige Vorteile, insbesondere im Hinblick auf die Herstellung von Pharmapackmitteln, wie etwa Spritzen, Karpulen, Ampullen oder Fläschchen. Die Erfindung ist daher besonders geeignet für wolframfreie oder wolframarme Pharmapackmittel, wie insbesondere Spritzen.

## Patentansprüche

1. Formwerkzeug zum Umformen von hohlkörperförmigen Glas-Vorprodukten, umfassend
einen Formdorn zum Umformen wenigstens eines Abschnittes eines erhitzten Bereiches des Glas-Vorproduktes, wobei
der Formdorn zumindest ein temperaturstabiles Kernmaterial und eine Diffusionsschicht umfasst und die Diffusionsschicht zumindest denjenigen Bereich der Oberfläche des Formdorns umfasst, welcher während des Umformprozesses im Kontakt mit dem Glas-Vorprodukt steht, und wobei eindiffundiertes Material intermetallische Phasen im oberflächennahen Bereich des Kernmaterials bildet, um eine Diffusionszone auszubilden, wobei sich die Diffusionsschicht durch ein zusätzliches, von dem Kernmaterial abweichendes Material auszeichnet, und wobei der Mindestgehalt des Diffusionsmaterials, gemessen an der Oberfläche des Formdorns, wenigstens 30 Atom %, bevorzugt wenigstens 40 Atom % beträgt.

2. Formwerkzeug nach vorstehendem Anspruch, **dadurch gekennzeichnet, dass** das Kernmaterial ein Edelmetall und/oder ein Übergangselement, insbesondere Wolfram oder eine Wolfram-haltige Legierung, umfasst.

3. Formwerkzeug nach einem der vorstehenden Ansprüche, **dadurch gekennzeichnet, dass** das Kernmaterial einen Wolframanteil von wenigstens 70 Gew.-%, bevorzugt wenigstens 90 Gew.-%, besonders bevorzugt wenigstens 95 Gew.-% und ganz bevorzugt mit einem Wolfram-Gehalt von wenigstens 99,9 Gew.-%.

4. Formwerkzeug nach einem der vorstehenden Ansprüche, **dadurch gekennzeichnet, dass** das Kernmaterial Wolfram-Zirkonoxid (W-ZrO₂) umfasst mit einem Anteil von zugesetztem ZrO₂ von 0,01 Gew.-% bis zu 2,5 Gew.-%, bevorzugt von 0,1 Gew.-% bis zu 2,2 Gew.-%, besonders bevorzugt von 0,7 Gew.-% bis 0,9 Gew.-%.

5. Formwerkzeug nach einem der vorstehenden Ansprüche, **dadurch gekennzeichnet, dass** das Kernmaterial Wolfram-Ceriumoxid (W-CeO₂) umfasst mit einem Anteil von zugesetztem CeO₂ von 0,01 Gew.-% bis zu 2,5 Gew.-%, bevorzugt von 0,1 Gew.-% bis zu 2,5 Gew.-%, und besonders bevorzugt von 1,8 Gew.-% bis zu 2,2 Gew.-%.

6. Formwerkzeug nach einem der vorstehenden Ansprüche, **dadurch gekennzeichnet, dass** das Kernmaterial Wolfram-Lanthanoxid (W-La₂O₃) umfasst mit einem Anteil von zugesetztem La₂O₃ von 0,01 Gew.-% bis zu 2,5 Gew.-%, bevorzugt von 0,1 Gew.-% bis zu 2,5 Gew.-%, und besonders bevorzugt von 1,8 Gew.-% bis zu 2,2 Gew.-%.

7. Formwerkzeug nach einem der vorstehenden Ansprüche, **dadurch gekennzeichnet, dass** das Kernmaterial einen Anteil von Kalium zwischen 5 und 100 ppm enthält, bevorzugt zwischen 30 und 80 ppm und besonders bevorzugt zwischen 50 und 70 ppm.

8. Formwerkzeug nach einem der vorstehenden Ansprüche, **dadurch gekennzeichnet, dass** das Diffusionsmaterial Silizium (Si) und/oder Aluminium (Al) umfasst.

9. Formwerkzeug nach einem der vorstehenden Ansprüche, **dadurch gekennzeichnet, dass** die Schichtdicke der Diffusionsschicht für Silizium als Diffusionselement 1 bis 200 µm, bevorzugt 1 bis 100 µm und besonders bevorzugt 1 bis 20 µm beträgt.

10. Formwerkzeug nach einem der vorstehenden Ansprüche, **dadurch gekennzeichnet, dass** die Schichtdicke der Diffusionsschicht für Aluminium als Diffusionselement 1 bis 300 µm, bevorzugt 5 bis 90 µm beträgt.

11. Vorrichtung zum Umformen von hohlkörperförmigen Glas-Vorprodukten, umfassend
- eine Einrichtung zur lokalen Erhitzung eines Bereichs eines Glas-Vorprodukts bis über dessen Erweichungspunkt, und
- zumindest ein Formwerkzeug zum Umformen wenigstens eines Abschnittes eines mit der Einrichtung zur lokalen Erhitzung erhitzten Bereichs eines Glas-Vorprodukts,
- wobei das Formwerkzeug einen Formdorn gemäß einem der vorstehenden Ansprüche umfasst.

12. Vorrichtung zum Umformen von hohlkörperförmigen Glas-Vorprodukten nach vorstehendem Anspruch, wobei die Einrichtung zur lokalen Erhitzung einen Laser umfasst,
- wobei eine Rotationseinrichtung vorgesehen ist, um das Formwerkzeug und das Glas-Vorprodukt relativ zueinander zu rotieren, und wobei
- das Formwerkzeug so ausgebildet ist, dass ein Oberflächenbereich des umzuformenden Abschnittes des Glas-Vorproduktes nicht durch das Formwerkzeug abgedeckt wird, wobei der Laser oder eine dem Laser nachgeschaltete Optik so angeordnet ist, dass das Laserlicht bei der Umformung auf den nicht vom Formwerkzeug abgedeckten Bereich eingestrahlt wird, und wobei eine Steuereinrichtung vorgesehen ist, welche den Laser so ansteuert, dass ein Glas-Vorprodukt zumindest zeitweise während der Umformung durch das Laserlicht erwärmt wird.

13. Verfahren zur Herstellung eines Pharmapackmittels aus Glas, bei welchem
- lokal ein hohlkörperförmiges Glas-Vorprodukt bis über dessen Erweichungspunkt erhitzt, und
- mit zumindest einem Formwerkzeug wenigstens ein Abschnitt eines mit einer Einrichtung zur lokalen Erhitzung erhitzten Bereiches des Glas-Vorproduktes umgeformt wird,
- wobei das Formwerkzeug einen Formdorn nach einem der vorstehenden Ansprüche 1 bis 10 umfasst.

## Claims

1. A moulding tool for reshaping hollow-body glass precursors, comprising:
a forming mandrel for reshaping at least a portion of a heated region of the glass precursor;
wherein
the forming mandrel comprises at least one heat-resistant core material and a diffusion layer; and wherein said diffusion layer is provided in at least that area of the surface of the forming mandrel, which is in contact with the glass precursor during the reshaping process; and wherein material diffused into a near-surface zone of the core material forms intermetallic phases there to form a diffusion zone, wherein said diffusion layer is distinguished by an additional material distinct from the core material; and
wherein the minimum content of the diffusion material as measured at the surface of the forming mandrel is at least 30 atomic percent, preferably at least 40 atomic percent.

2. The moulding tool according to the preceding claim, **characterised in that** the core material comprises a noble metal and/or a transition element, in particular tungsten or a tungsten-containing alloy.

3. The moulding tool according to any one of the preceding claims, **characterised in that** the core material has a tungsten content of at least 70 wt%, preferably at least 90 wt%, more preferably at least 95 wt%, and most preferably a tungsten content of at least 99.9 wt%.

4. The moulding tool according to any one of the preceding claims, **characterised in that** the core material comprises tungsten-zirconium dioxide (W-ZrO₂) with a proportion of added ZrO₂ from 0.01 wt% up to 2.5 wt%, preferably from 0.1 wt% up to 2.2 wt%, most preferably from 0.7 wt% to 0.9 wt%.

5. The moulding tool according to any one of the preceding claims, **characterised in that** the core material comprises tungsten-cerium oxide (W-CeO₂) with a proportion of added CeO₂ from 0.01 wt% up to 2.5 wt%, preferably from 0.1 wt% up to 2.5 wt%, and most preferably from 1.8 wt% to 2.2 wt%.

6. The moulding tool according to any one of the preceding claims, **characterised in that** the core material comprises tungsten-lanthanum oxide (W-La₂O₃) with a proportion of added La₂O₃ from 0.01 wt% up to 2.5 wt%, preferably from 0.1 wt% up to 2.5 wt%, and most preferably from 1.8 wt% to 2.2 wt%.

7. The moulding tool according to any one of the preceding claims, **characterised in that** the core material contains a proportion of potassium between 5 and 100 ppm, preferably between 30 and 80 ppm, and most preferably between 50 and 70 ppm.

8. The moulding tool according to any one of the preceding claims, **characterised in that** the diffusion material comprises silicon (Si) and/or aluminium (Al).

9. The moulding tool according to any one of the preceding claims, **characterised in that** for silicon as the diffusion element, the layer thickness of the diffusion layer is from 1 to 200 µm, preferably from 1 to 100 µm, and most preferably from 1 to 20 µm.

10. The moulding tool according to any one of the preceding claims, **characterised in that** for aluminium as the diffusion element, the layer thickness of the diffusion layer is from 1 to 300 µm, preferably from 5 to 90 µm.

11. An apparatus for reshaping hollow-body glass precursors, comprising:
- a means for locally heating a region of a glass precursor to above the softening point thereof; and
- at least one moulding tool for reshaping at least a portion of the region of a glass precursor that has been heated by said means for locally heating;
- wherein the moulding tool comprises a forming mandrel according to any one of the preceding claims.

12. The apparatus for reshaping hollow-body glass precursors according to the preceding claim, wherein the means for locally heating comprises a laser;
- wherein rotation means are provided to rotate the moulding tool and the glass precursor relative to one another; and wherein
- the moulding tool is configured such that a surface area of the portion of the glass precursor to be reshaped is not covered by the moulding tool, wherein the laser or an optical system downstream of the laser is arranged such that during the reshaping the laser light is irradiated onto the area not covered by the moulding tool;
and wherein a control unit is provided which drives the laser such that a glass precursor is at least temporarily heated by the laser light during the reshaping.

13. A method for producing a pharmaceutical packaging made of glass, wherein:
- a hollow-body glass precursor is locally heated to above its softening point; and
- at least one moulding tool is used to reshape at least a portion of a region of the glass precursor heated by a means for locally heating;
- wherein the moulding tool comprises a forming mandrel according to any one of the preceding claims 1 to 10.

## Revendications

1. Outil de formage destiné à la mise en forme de produits semi-finis en verre en forme de corps creux, comprenant
un mandrin de formage destiné à la mise en forme d'au moins une partie d'une zone chauffée du produit semi-fini en verre, dans lequel
le mandrin de formage comprend au moins un matériau de noyau à stabilité en température et une couche de diffusion, et la couche de diffusion comprend au moins la zone de la surface du mandrin de formage qui est en contact avec le produit semi-fini en verre, pendant le processus de formage, et dans lequel un matériau apporté par diffusion forme des phases intermétalliques dans la zone du matériau de noyau qui est proche de la surface, afin de créer une zone de diffusion, la couche de diffusion **se caractérisant par** un matériau supplémentaire qui est différent du matériau du noyau, et la teneur minimale du matériau de diffusion, mesurée à la surface du mandrin de formage, étant au moins de 30 % d'atomes, de préférence au moins de 40 % d'atomes.

2. Outil de formage selon la revendication précédente, **caractérisé en ce que** le matériau de noyau comprend un métal précieux et/ou un élément de transition, en particulier du tungstène ou un alliage contenant du tungstène.

3. Outil de formage selon l'une des revendications précédentes, **caractérisé en ce que** le matériau de noyau présente une teneur en tungstène d'au moins 70 % en poids, de préférence d'au moins 90 % en poids, de préférence notamment d'au moins 95 % en poids, et présente de façon particulièrement avantageuse une teneur en tungstène d'au moins 99,9 % en poids.

4. Outil de formage selon l'une des revendications précédentes, **caractérisé en ce que** le matériau de noyau comprend de l'oxyde de tungstène-zircone (W-ZrO₂) avec une proportion de ZrO₂ ajouté allant de 0,01 % en poids à 2,5 % en poids, de préférence de 0,1 % en poids à 2,2 % en poids, et de façon particulièrement avantageuse de 0,7 % en poids à 0,9 % en poids.

5. Outil de formage selon l'une des revendications précédentes, **caractérisé en ce que** le matériau de noyau comprend de l'oxyde de tungstène-cérium(W-CeO₂) avec une proportion de CeO₂ ajouté allant de 0,01 % en poids à 2,5 % en poids, de préférence de 0,1 % en poids à 2,5 % en poids, et de façon particulièrement avantageuse de 1,8 % en poids à 2,2 % en poids.

6. Outil de formage selon l'une des revendications précédentes, **caractérisé en ce que** le matériau de noyau comprend de l'oxyde de tungstène-lanthane (W-La₂O₃) avec une proportion de La₂O₃ ajouté allant de 0,01 % en poids à 2,5 % en poids, de préférence de 0,1 % en poids à 2,5 % en poids, et de façon particulièrement avantageuse de 1,8 % en poids à 2,2 % en poids.

7. Outil de formage selon l'une des revendications précédentes, **caractérisé en ce que** le matériau de noyau présente une teneur en potassium qui est comprise entre 5 et 100 ppm, de préférence entre 30 et 80 ppm, et de façon particulièrement avantageuse entre 50 et 70 ppm.

8. Outil de formage selon l'une des revendications précédentes, **caractérisé en ce que** le matériau de diffusion comprend du silicium (Si) et/ou de l'aluminium (Al).

9. Outil de formage selon l'une des revendications précédentes, **caractérisé en ce que** l'épaisseur de la couche de diffusion, pour le silicium en tant qu'élément de diffusion, est comprise entre 1 et 200 µm, de préférence entre 1 et 100 µm, et de façon particulièrement avantageuse entre 1 et 20 µm,

10. Outil de formage selon l'une des revendications précédentes, **caractérisé en ce que** l'épaisseur de la couche de diffusion, pour l'aluminium en tant qu'élément de diffusion, est comprise entre 1 et 300 µm, de préférence entre 5 et 90 µm.

11. Dispositif de formage de produits semi-finis en verre en forme de corps creux, comprenant
- un moyen de chauffage local d'une zone d'un produit semi-fini en verre, jusqu'au-delà du point de ramollissement de celui-ci, et
- au moins un outil de formage destiné à la mise en forme d'au moins une partie d'une zone d'un produit semi-fini en verre qui a été chauffée à l'aide du moyen de chauffage local,
- l'outil de formage comprenant un mandrin de formage selon l'une des revendications précédentes.

12. Dispositif de formage de produits semi-finis en verre en forme de corps creux, selon la revendication précédente, dans lequel le moyen de chauffage local comprend un laser,
- dans lequel il est prévu un dispositif de rotation destiné à mettre l'outil de formage et le produit semi-fini en verre en rotation l'un par rapport à l'autre, et dans lequel
- l'outil de formage est agencé de manière à ce qu'une zone de surface de la partie du produit semi-fini en verre devant être mise en forme ne soit pas recouverte par l'outil de formage, sachant que le laser ou un système optique placé en aval du laser est disposé de manière à ce que, lors du formage, la lumière laser soit envoyée sur la zone qui n'est pas recouverte par l'outil de formage, et sachant qu'il est prévu un dispositif de commande qui active le laser de manière à ce qu'un produit semi-fini en verre soit chauffé par la lumière laser au moins temporairement pendant le formage.

13. Procédé de fabrication d'un produit d'emballage pharmaceutique en verre, selon lequel
- on chauffe localement un produit semi-fini en verre en forme de corps creux, jusqu'au-delà du point de ramollissement de celui-ci, et
- on met en forme, à l'aide d'au moins un outil de formage, au moins une partie d'une zone du produit semi-fini en verre qui a été chauffée avec un moyen de chauffage local,
- l'outil de formage comprenant un mandrin de formage selon l'une des revendications précédentes 1 à 10.
